# EUROPEAN PATENT APPLICATION

(11) **EP 1 626 158 A2**
(43) Date of publication of application: **15.02.2006**
(21) Application number: 05075200.5
(22) Date of filing: 26.01.2005
(51) Int. Cl.: E21B 41/00, H01L 41/113

(54) **Device for generating electrical energy downhole**

(30) Priority: 09.08.2004 AR 0102854
(71) Applicant: Servicios Especiales San Antonio, S.A., 1048-BUENOS AIRES (AR)
(72) Inventor: Ariel Garcia, Jorge, 8300 Neuquen (AR); Luis Bianchi, Gustavo, 8300 Neuquen (AR); Juarez, Ricardo, 1425 Buenos Aires (AR)
(74) Representative: Ponti Sales, Adelaida

(57) **Abstract**

A device for generating electrical energy from the vibrations generated by a well bore drill tool during the operation of the tool when drilling oil wells, the device comprising an array of piezoelectric elements mounted in the tool and connected to a vibrating part of the tool for converting vibrations of the tool into electrical energy.

## Description

### FIELD OF THE INVENTION

The present invention relates to a new device for obtaining energy, preferably electrical energy, from the vibrations generated by a system, machine, mechanism or tool.

While in this specification the invention will be described in relation to a well bore drilling tool, it should be clear that the invention is not restricted to this field of application. Thus, the word tool intend to mean any tool, machine, mechanism and device that vibrates in operation or having at least a part thereof capable of generating vibrations during operation. Vibrations should be understood as pressure variations either in solid, hydraulic and/or gaseous means.

The inventive device is preferably for use in tools for drilling well bores either wells producing gas, water, petroleum, etc. and the energy generated by the device is available to be directed or undirected fed to electrical, electronic and/or electromechanical equipment, preferably equipment employed in activities related to the well.

### BACKGROUND OF THE INVENTION

While it is know to convert mechanical energy into electricity by using piezoelectric means, this means have been well used in domestic devices for generating electrical arcs for use in several applications and the industry has used piezoelectric devices for obtaining energy by producing controlled mechanical impacts.

It is known in the field of the oil, petroleum, industry that the well bores are drilled by using drilling tools and a lot of information is necessary before operating the tools. Such information may include parameters like drilling depths, pressure to which the tools will be subject, temperature in the drilling medium, humidity into the well bore, chemical components and percentage contents thereof in the medium, etc.

Generally, the tool systems for drilling oil well bores comprise a plurality of tubular members having their ends threaded to permit the connection to each other, these members are named drill pipes and the same are coupled to each other as the drilling is progressing and depth is increasing. The assembly of several drill pipes connected into the well bore is named drill string. With the purpose of adding weight to the string the bottom length of the string is comprised of tubular members having thicker walls, and therefore more weight, named drill collars. Finally a bit is located at the end to drill the bore through the several soil, sand, rock layers. This arrangement of components, comprising the bottom length of the string and including the bit is named the Bottom Hole Assembly. During the drilling operation a surface equipment causes the drill string and the bit connected thereto to rotate. Simultaneously, a drill mud is injected to flow along the bore to prevent the bore from collapsing and to bring the drilled material, removed by the bit, up to the surface.

As it is known in the art, some devices have been developed to feed the electronic equipment that are housed into the bottom assembly, with such devices being designed to record and transmit to the surface equipment all the data obtained from the well bore during drilling. Since the number and kind of recording and transmitting devices have increased and the amount of information is huge, more and more electrical energy is today necessary to feed all these measuring devices.

Conventionally, two types of energy sources have been employed to energize theses devices, batteries, particularly lithium ion batteries, and turbo-hydraulic generators. The lithium batteries have been employed for many years in the oil field and, while they have been reliable, the cost thereof is very high. In addition, they have a chemical composition that makes them very contaminating for the natural environment as well as they require costly procedures for manipulating, transporting and finally disposing thereof.

The turbo-hydraulic generators appear as an alternative because of the important hydraulic power available while drilling the bore. However, these generators produce alterations in the magnetic field around the device thus interfering in the measuring devices such as the magnetic guiding devices in the bottom hole assembly. Also, these generators do not tolerate the blocking material employed in the drilling fluid and, because of the high rates of the turbine and the abrasion produced by the solids in the drill fluid, these generators require frequent servicing.

The technologies employed nowadays in the manufacturing of drill bits have permitted to obtain bits with remarkably extended life thus the replacement of worn bits by new ones during the drilling operations are not so frequent as it was in the past. This is related to the replacement of batteries or generators because the exhausted batteries or generators are replaced during the dead periods when the worn bits are removed and the new ones are installed. Since the number of dead periods are less than they used to be the batteries and/or generators life should be longer in order to accompany the bits replacements. The immediate solution for this is to place more batteries, which is expensive, or to extend the life of the hydraulic generators what is not easy to do.

It should be very convenient to have an alternative solution to provide electrical energy for the several equipment, such as bottom hole measuring and/or recording and/or transmission devices, employed in the oil field.

### DESCRIPTION OF THE INVENTION

It is therefore an object of the present invention to provide a device for converting mechanical energy from a mechanism into electrical energy.

It is a further object of the present invention to provide a device for obtaining electrical energy from a tool, mechanism, equipment, machine and the like capable of generating vibrations either in a solid, gaseous or hydraulic medium.

It is another object of the present invention to provide a device for generating electrical energy from vibrating tools, the device comprising piezoelectric means connected to at least a vibrating part of the tool for converting vibrations of the tool into electrical energy, with the piezoelectric means preferably comprising at least one piezoelectric element subject to variable mechanical pressure and connected to a control circuit and to a stress restricting device for protecting the piezoelectric means, wherein the control circuit preferably comprises at least one transformer, a rectifying bridge and a tension regulator, and wherein the control circuit includes at least one electrical energy accumulator.

It is a further object of the present invention to provide a device for generating electrical energy from the vibrations generated by a well bore drill tool during the operation of the tool when drilling oil wells, the device comprising an array of piezoelectric elements mounted in the tool and connected to a vibrating part of the tool for converting vibrations of the tool into electrical energy that may be used directly in the tool or may be accumulated for further use.

It is a further object of the present invention to provide a device for generating electrical energy from a well bore drilling tool, the device comprising at least one assembly of piezoelectric elements housed into a main tubular body of the tool, the tubular body having a first end connected to a stationary coupling device and a second end connected to a movable coupling device capable of axially moving within the main tubular body for applying varying pressure onto the at least one piezoelectric elements assembly, the at least one assembly of piezoelectric elements being connected to an electronic circuit for adjusting and/or regulating electrical parameters of the electrical energy.

It is a further object of the present invention to provide a new energy generating device for use with a drill string, preferably for mounting in the bottom hole assembly and connected to the drill bit, preferably through the drill collar or similar connection or coupling.

It is still another object of the present invention to provide a device for generating electrical energy from a tool, machine or any mechanism that vibrates during operation, wherein the device is capable of converting these vibrations into electricity to be directly used in the machine, tool or mechanism or for accumulating in corresponding accumulators, batteries and the like.

It is even another object of the present invention to provide an almost stationary device for generating electricity from the vibrations of a tool during operation thereof, the device being independent from the drill fluid employed in the tool and having extended periods of operation with low need of service.

The above and other objects, features and advantages of this invention will be better understood when taken in connection with the accompanying drawings and description.

### BRIEF DESCRIPTION OF THE DRAWINGS

The present invention is illustrated by way of example in the following drawings wherein:
Figure 1 shows a perspective view of the device according to the invention;
Figure 2 shows an exploded perspective view of the device of Figure 1;
Figure 3 shows a side elevational view of the device of Figure 2 with the main tubular body removed from clarity purposes;
Figure 4 shows a perspective view of the electrical concentring device;
Figure 5 shows a side elevational view of movement restricting means forming part of the movable coupling device of the inventive electrical generating device;
Figure 6 shows a perspective view of an assembly of piezoelectric elements removed out from the main tubular body and connected to a circuit for adapting, such as adjusting and/or regulating, electrical parameters of the electrical energy;
Figure 7 shows a side elevational view of one array of piezoelectric discs (not shown) housed in an outer casing;
Figure 8 shows an end view of the left end, female coupling, of the array of Figure 7;
Figure 9 shows an end view of the right end, male coupling, of the array of Figure 7;
Figure 10 shows a side elevational view of the array of piezoelectric discs of the invention with the outer casing removed for clarity purposes;
Figure 11 shows an exploded perspective view of the array of piezoelectric discs according to the invention;
Figure 12 shows an enlarged portion of the discs array, the portion being encircled in Figure 11;
Figure 13 shows an exploded perspective view of the stress restricting device for protecting the piezoelectric means against excessive stress and impacts; and
Figure 14 shows a diagrammatic view of the electric control circuit of the inventive device.

### DESCRIPTION OF A PREFERRED EMBODIMENT

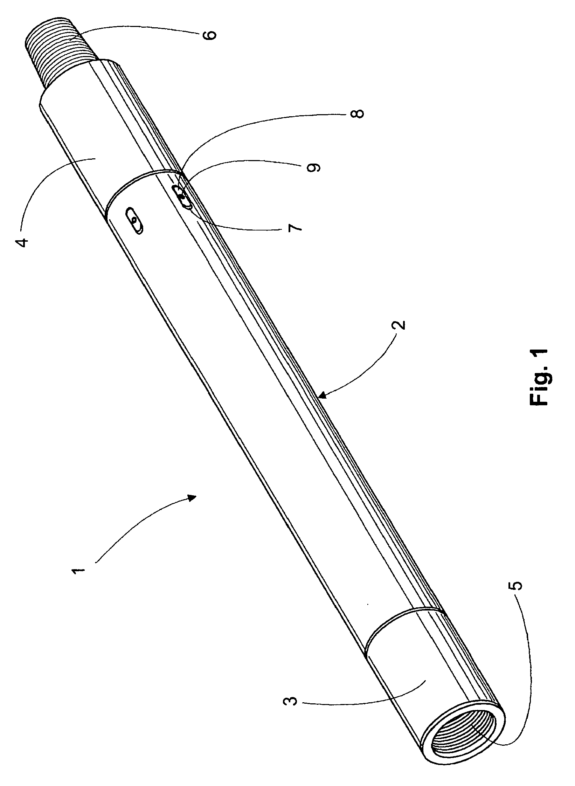

Now referring in detail to the invention, the same refers to a device indicated by general reference number 1 in Figure 1, wherein device 1 is an electrical energy generator for use in mechanisms, machines, devices, tools, etc. capable of producing vibrations when operating, with the generated electricity being capable of being used by the same machinery, tool and the like for feeding electrical and/or electronic and/or electromechanical and/or electromagnetic equipment forming part of the tool, preferably a drill string employed in well bores producing oil, gas and/or water.

Device 1 comprises a main tubular body 2 having a first end including, firmly mounted thereto, a stationary coupling device 3, and a second opposite end including a movable coupling device 4 that has at least a part thereof inside body 2 and that axially moves relative to body 2. Stationary coupling device 3 includes at an inner part thereof a female thread 5 for coupling a drilling tool, such as a bit, to a drill string or similar component employed in the drilling of well bores. In addition, movable coupling device 4 also includes a male thread 6 with the same purposes like female thread 5.

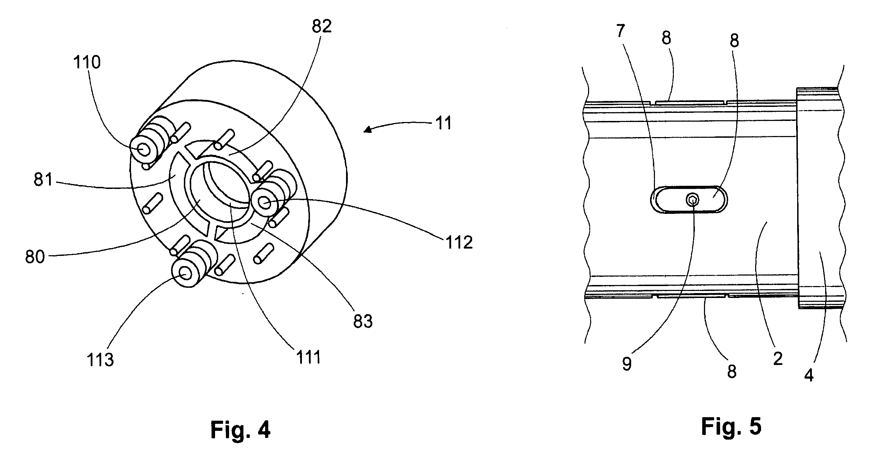

Main body 2 includes movement restricting means for restricting the axial relative movement between main tubular body 2 and movable coupling device 4. Movement restricting means comprises a plurality of notches 7, see also Figure 5, circumferentially extending around body 2 for receiving keys 8 outwardly radially extending from movable coupling device 4 for limiting or restricting the axial movement of device 4 within body 2. Each key 8 is attached to device 4 by a screw 9. The details of these means may be clearly appreciated from Figure 5.

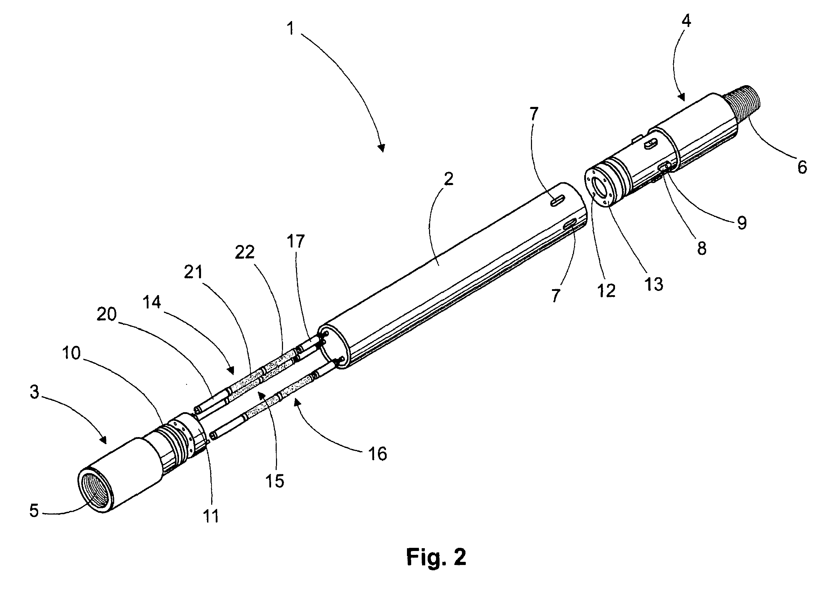

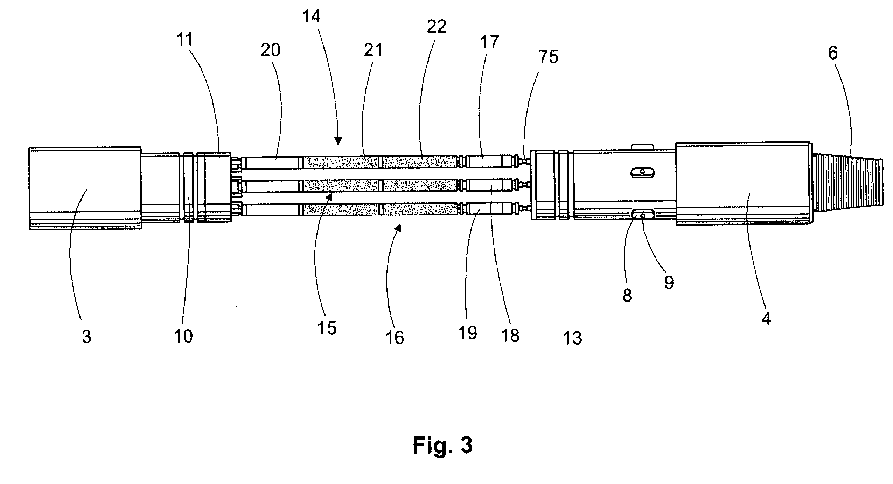

The general inner construction of the inventive device may be described in connection to Figures 2 and 3. The stationary coupling device includes a sealing means, such as a sealing ring 10, for sealing the connection to an electrical concentring device 11 which will be further described. At the opposite end, movable device 4 includes a force applying collar 13 that is fixed to device 4 by screws 12, Figure 2. Piezoelectric means comprising a a plurality of piezoelectric elements, preferably three assemblies of piezoelectric elements, or piezoelectric assemblies 14, 15, 16, are mounted between, and connected to, collar 13 and device 11. A stress restricting device for protecting the piezoelectric system against excessive stress, impacts, pressures, etc. is also provided. The stress restricting device may comprise one or more restricting elements 17, 18, 19, such as springs, high impact resisting rubber pieces, Belleville-type discs springs, hydraulic springs, bumpers, etc. Preferably, the stress restricting device has an adjustable stiffness for reaching the mechanical resonance of device 1.

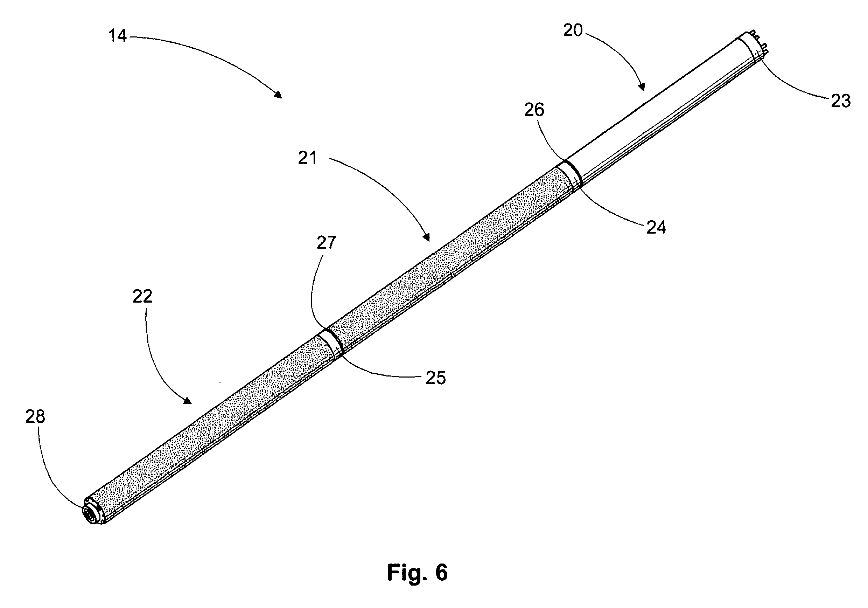

Each assembly of piezoelectric elements is comprised of a plurality of modules, preferably three independent modules that are connected to each other. Figure 6 shows one of the assemblies, namely assembly 14, that comprises an adapting circuit or adapting device 20 and at least one array 21, 22 of piezoelectric discs. Device 20 and arrays 21, 22 are substantially cylindrical and axially coupled to each other by their ends and by means of mechanical and electric couplings. The disc array is also connected to restricting or protecting means 17, 18, 19.

Device 20 and arrays 21, 22 are provided at a respective end thereof with male coupling guides 23, 24, 25 while at opposite ends, the device and arrays include corresponding female coupling guides 26, 27, 28. Only female coupling 28 corresponding to array 22 is shown in Figure 6. Basically discs arrays 21, 22 are connected in parallel, therefore the currents generated by the arrays are summed and the electric tensions are leveled, with these parameters being fed to adapting device 20 for adjusting and adapting the same.

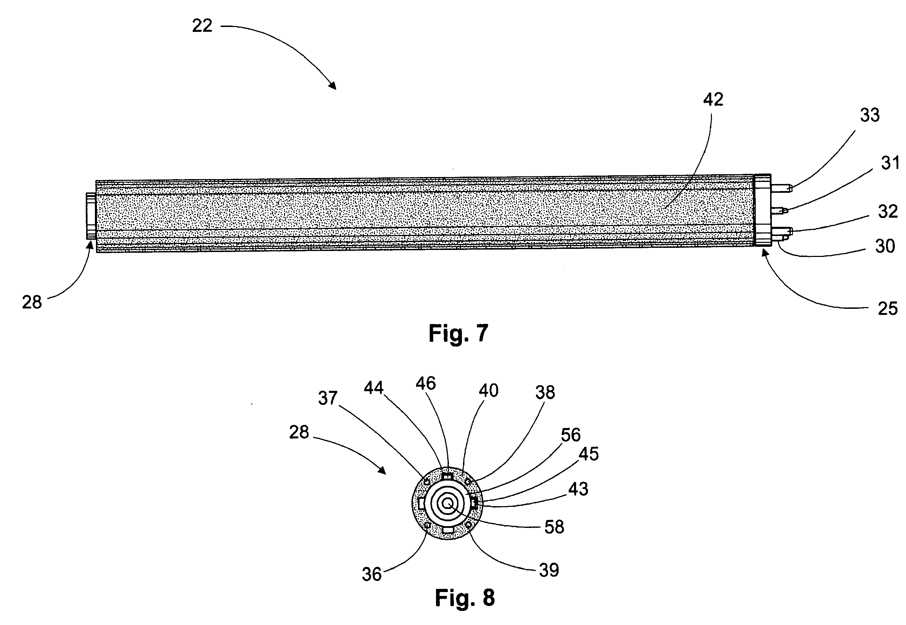

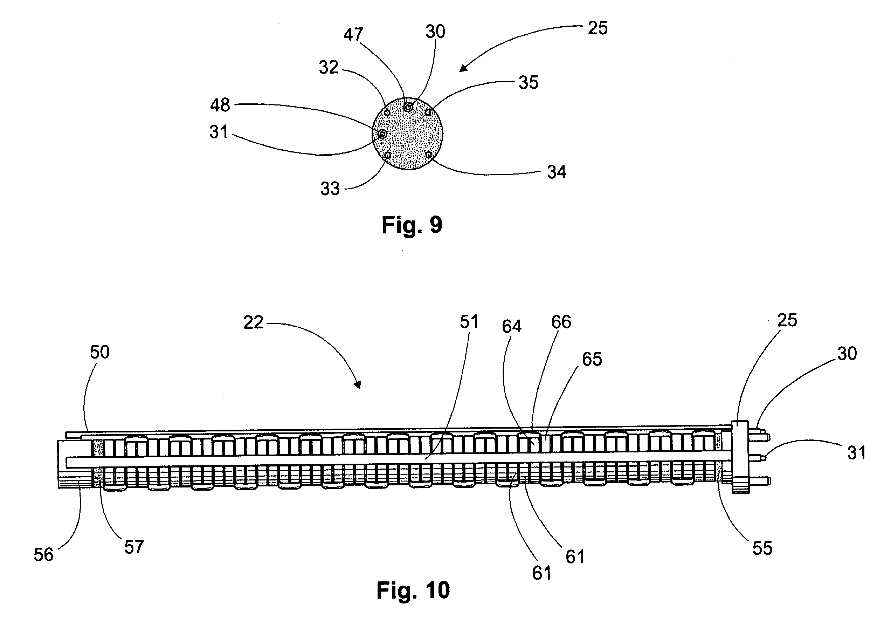

Figure 7 shows a side elevational view of one array of piezoelectric discs, namely array 22, having a first end 28, defining a female coupling, and a second end 25, defining a male coupling. Female end 28, shown by an end view in Figure 8, comprises a portion of an outer cylindrical casing 42 that includes four orifices or coupling bores 36, 37, 38, 39, forming a mechanical coupling for receiving pins 32, 33, 34, 35, to which reference will be made below, of an adjacent piezoelectric assembly. Female end 28 also includes two notches 43, 44 for receiving electrical connecting terminals or female contacts 45, 46 for electrically coupling male terminals. Male end 25, shown in the end view of Figure 9, comprises a cylindrical member 41 including four mechanical coupling pins 32, 33, 34, 35, axially extending relative to a longitudinal axis of the tubular casing 42, and two electrical connecting terminals or contacts 30, 31 passing through corresponding orifices 47, 48. A first one 30, 31, of the electrical connecting terminals of first end 28 is electrically connected to a first one 45, 46, of the connecting terminals of second end 25 and a second terminal 30, 31, of the first end is electrically connected to a second terminal 45, 46, of the second end.

The array of piezoelectric discs is shown in Figures 10-13 without outer casing 42 in order to have a clear view of the discs. Casing 42 is made of a non conductive material to enclose the discs into an electrically isolated environment. Two conductive strips 50, 51 are radially provided against an inner surface, not shown, of casing 42, angularly arranged at 90° from each other and extending all along the length of the outer casing. Each strip includes a first end defining one of the electrical connecting terminals 30, 31, and a second end defining one of the female contacts 45, 46, formed by a contacting sheet.

A plurality of discs 52 made of piezoelectric material is assembled along a guiding shaft or stem 53 which is coated or encased into an electric insulating sheath 54 in order to keep form an insulation between the discs and shaft. The piezoelectric material may be selected from ceramics, crystals, composite materials, lead titanate, lead zirconate and any other well know piezoelectric.

Electrically insulating shaft 53 is mounted at a first end thereof in coupling 24 and is electrically insulated by an insulating disc 55. At the opposite end, shaft 53 is mounted in a head 56 with an insulating disc 57 also arranged between the end the shaft and the head. Head 56 is a cylindrical member having a wall thickness or dimension for accommodating in the annular surface of insulating disc 57. The adjustments or fixing of the all package formed by the piezoelectric discs over guide shaft 54 is made by an adjusting screw 58 that is threaded over thread 59 for pre-compressing and compressing the array of piezoelectric discs. A spring disc or a well know Belleville disc 60 is arranged between screw 58 and head 56.

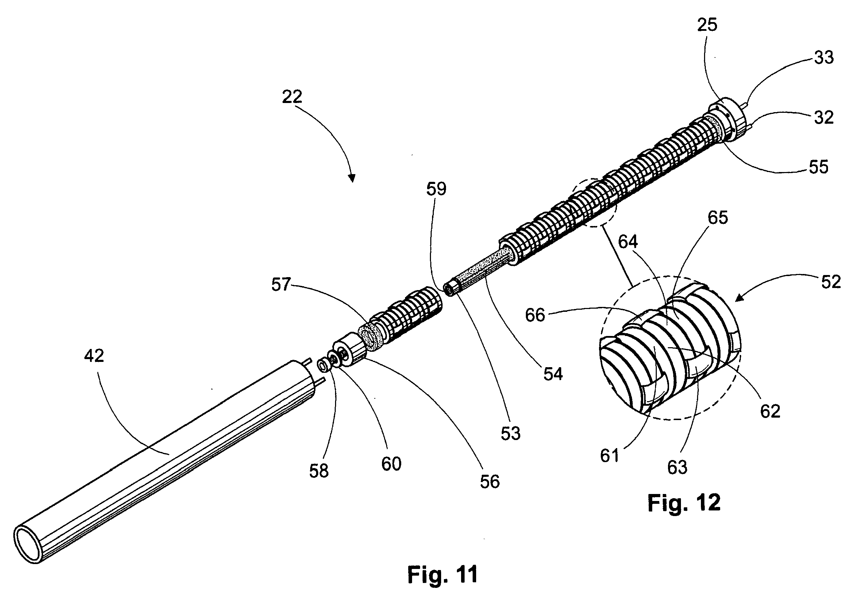

As it is shown in Figure 12, piezoelectric discs are in-parallel connected. That is, the spaced apart circular sides of two adjacent discs 61, 62, namely the left side of disc 61 and the right side of disc 62, are electrically connected by a connecting plate 63 that also connects to the right side of a disc (no reference number) adjacent to disc 61 and to the left side of disc 64. In addition, the adjacent or facing sides of discs 61, 62, namely right side of disc 61 and left side of disc 62, are connected, by a connecting plate 66, to the adjacent or facing sides of two adjacent discs 64, 65, namely right side of disc 64 and left side of disc 65. Plates 63, 66 are angularly offset between each other, in 90° for example, and are made of any appropriate conductive material, a metal such as copper and the like. This pattern is repeated all along assembly 21, 22. Since all plates 66 are in electrical contact to strip 50 and since plates 63 are in electrical contact to strip 51, with the strips shown in Figure 10, the piezoelectric discs are connected in-parallel. In this way the several generated electrical tensions provide a resulting tension that can be measured between conducting strips 50, 51, between terminals 30, 31 or between terminals 45, 46. According to principles of in-parallel connections, the resulting currents will be summed up into a total current.

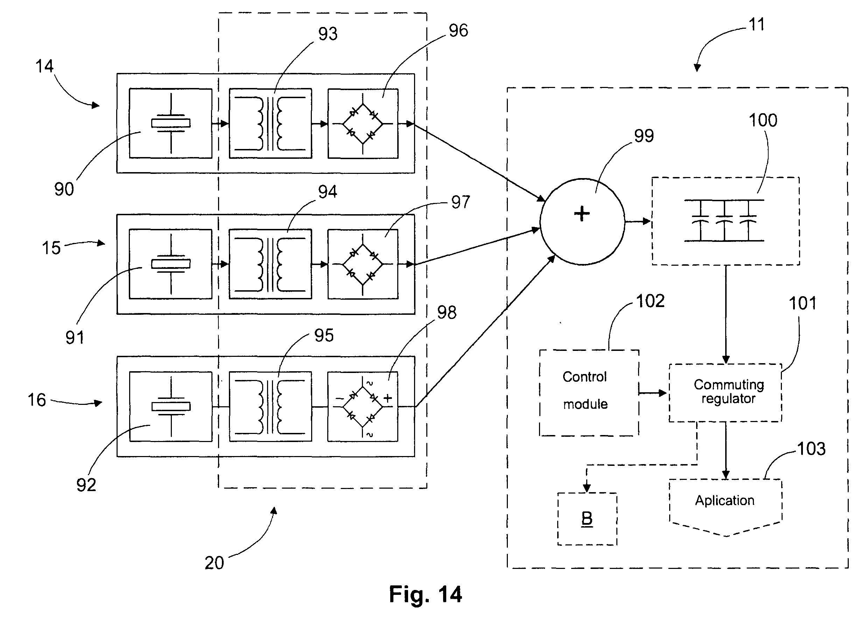

Making now reference to Figure 4, concentring device 11 comprises a cavity 80 for containing a control circuit, to which reference will be made further, and one or more operating equipment, namely measuring, recording, transmission, processing devices generally employed in the drilling and other oil well activities, which devices are to be fed by the energy generated by the piezoelectric elements. These devices may be electrical, electronic or electromechanical devices. Device 11 also has other cavities, namely cavities 81, 82, 83 for accommodating the flow of a drill mud employed in the drilling operation. These cavities continue along the stationary and movable coupling devices, the main tubular body and all other components in the energy generating device. Device 11 is named concentring device because it is intended to sum up or collect the electrical energy generated by assemblies 14, 15, 16 and, for the purpose of describing the circuits in Figure 14, device 11 is represented by block 99 in this Figure. As it will be seen, control circuit is comprised of several circuits for modifying and/or adjusting and/or regulating and/or adapting and/or accumulating the generated energy.

Concentring device 11 is connected to adapting circuit or device 20 by two wires, not illustrated, passing through orifice 110, with one wire connecting the positive output (not shown) of assembly 14, through adapting circuit 20, to concentring device 11. The other wire connects the negative output (not shown) of assembly 14, through adapting circuit or device 20, to main body 2 or to any other earth part of device 1. The connections of remaining piezoelectric assemblies 15, 16 are carried out in like manner except that the corresponding wires pass through orifices 112 and 113 respectively.

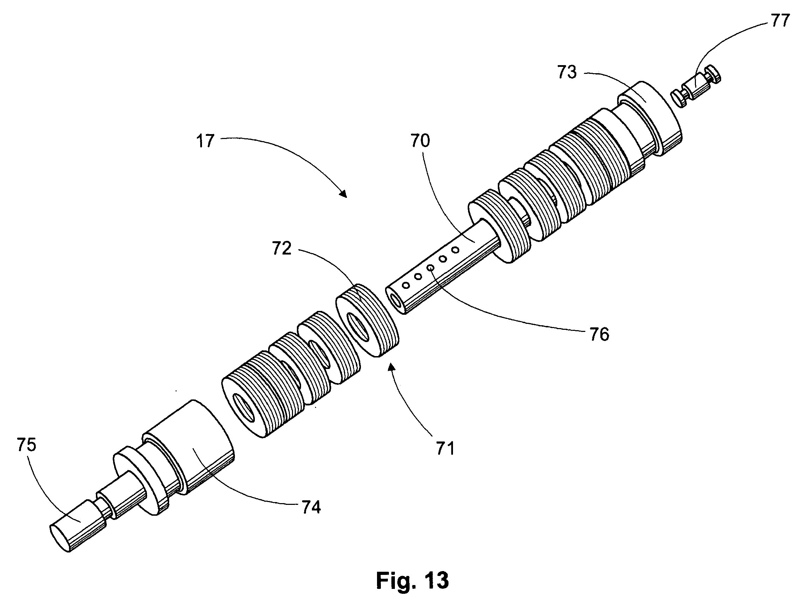

Figure 13 shows a stress restricting device 17, that is identical to devices 18, 19, and that comprises a guide stem 70 and a plurality of packs 71 each pack comprised of a plurality of Belleville discs 72 axially aligned and mounted over stem 70. Packs 72 are contained by actuator shaft members 73, 74, with member 74 having an actuator shaft 75 coupled to member 74 by means of any appropriate seal (not shown) to provide the system with protection in a hermetic or isolated or watertight environment. Shaft 70 includes a plurality of orifices 76 at its periphery for permitting inner flowing of a hydraulic fluid, such as oil, for minimizing friction forces between Belleville discs during operation of the system. The end of shaft 70, close to member 73 and within an orifice in member 73, an equalizing piston 77 is provided for compensating pressure changes in the hydraulic fluid when the Bellevile discs are compressed under the forces applied onto actuator shaft 75.

In operation, the vibrations and/or pressure changes in the drill tool will be converted into energy, more particularly electrical energy, by device 1. As it is well known, a quartz crystal provides electrical charges when the crystal is subject to a pressure deforming the piece of quartz. This phenomenon is known as piezoelectric effect. The reverse effect is also well known, when a piece of quartz crystal is subject to an electrical field applied thereto, the crystal reacts by deforming. This is known as reverse-piezoelectric effect. Therefore these piezoelectric materials may be employed in converting mechanical energy into electrical energy.

Both above mentioned effects have been applied in a number of fields. For example, the piezoelectric effect is employed to actuate lighters wherein a lever is employed to apply an impact onto a piezoelectric crystal thus creating an electrical field that is strong enough to light the gas expelled by the lighter. Piezoelectric elements are also employed in alarm clocks. This effect is employed by the present invention when operating the drill tool under a huge and constant amount of vibrations and pressure changes. In operation, movable coupling device 4 is located towards the bottom of the bore under drilling. When the drill string is still pending without being rested onto the bottom of the hole, stress restricting devices 17, 18, 19 keep device 4 spaced apart from body 2 under the force transmitted by actuator shafts, shaft 75 for example, to collar 13. This movement is limited or restricted by keys 8 and notches 7. In addition, keys 8 prevent the relative rotary movement between body 2 and coupling device 4.

When beginning the drilling the drill string is moved down and pressure is applied against the drill bit (not shown). Said pressure causes the separation or gap between main tubular body 2 and movable coupling device 4 to decrease and the piezoelectric assemblies 14, 15, 16, and in turn the arrays 21, 22 of piezoelectric discs, are subject to compression under the effect of the forces transmitted thereto by the stress restricting devices 17, 18, 19 through actuator shaft 75 and collar 13.

In the drilling, discontinuities, different consistencies and other irregularities of soil, sand, rocks, etc., cause the bit to move axially thus producing vibrations along the drill string. Said vibrations produce in turn variations in the pressure applied to the array of discs 21, 22, which pressures are mechanically restricted or controlled by devices 17, 18, 19. These restricting or protecting devices are designed to prevent, upon appearance of big accelerations, permanent damages in the arrays of piezoelectric discs, that is, structural damages, depolarization and the like.

The pressure changes exerted onto the array of discs 21, 22 produces, by piezoelectric effect, electrical energy. Since the pressure variations are mostly of low frequency, the total impedance of the array of discs is very high thus producing high voltage or electrical tensions. This requires of the use of adapting circuit or device 20 connected to the piezoelectric assembly, which device includes an impedance transformer for adjusting the impedance and voltage values into practical manageable values.

Making now more detailed reference to the control circuits of the present device, Figure 14 schematically shows a diagram of the invention. As above disclosed, each piezoelectric assembly 14, 15, 16 is comprised of arrays 21, 22, now enclosed in blocks as piezoelectric arrays 90, 91, 92, and adapting device 20, comprised of impedance transformers 93, 94, 95 and complete-wave rectifier bridges, such as diode bridges 96, 97, 98 for rectifying the energy generated by each piezoelectric array. The three outputs from the rectifiers are fed and summed up into concentring device 11, as represented by circular block 99. The electrical energy is then transferred to a set of capacitors 100 that reduces the wave loops or curls provided by the rectifiers. Then the energy is sent to a commuting regulator 101 that is commanded by a control module 102. Finally, the output of commuting regulator 101 is connected, as a power source, to the operating equipment or circuits, such as measuring devices, transmission equipment, recorders, data storing means, data processing means, sensing devices, etc. which are powered by the generated energy. All these devices or operating equipment are preferably housed in cavity 80 of concentring device 11. Transformers 93, 94, 95 and rectifiers 96, 97, 98 of the adapting device 20, as well as capacitors 100, regulator 101 are at least part of a control circuit that generally may operate as a circuit for adapting and/or adjusting and/or regulating and/or accumulating the energy generated by the inventive device. Thus, adapting circuit 20, enclosed by phantom lines in Figure 14, is part of the control circuit, while a further part of this control circuit is enclosed by the phantom lines at the right side of Figure 14 showing that this further part is housed in device 11. The generated energy may be directly fed to the operating equipment, generically known as MWD, or may be stored in an accumulator, such as a battery B.

The maximum output or performance of the inventive device is achieved by adjusting the stiffness of restricting or protecting devices 17, 18, 19 in order to reduce the bumping or protection effect thereof. Thus, the maximum movement will produce a maximum force onto the discs arrays, which force will be the result of the product between the mass of the components under vibrations, namely the drill collar and bits fore example, and the acceleration under which these components are subject. This adjustment would be made without exceeding the maximum pressure that the arrays of discs may resist. By the above mentioned adjustment a mechanical resonance is achieved in the mass of the system thus requiring less mechanical energy for generating electricity and making the system more efficient.

As stated above, while the present energy converter or generator has been disclosed in connection to a drill tool employed in the oil industry, it is clear that the inventive device may be applied in any machine or equipment that generates vibrations or pressure variations from which electricity may be obtained. In any event, the device of the invention, or the array of piezoelectric discs, generates and receives pressure vibrations along an axis according to piezo coefficient g33 corresponding to the material of the piezoelectric discs, and/or along two normal axes according to piezo coefficients g33 and g31 for the material of the piezoelectric discs. In other words, the pressures varying in time are exerted in alignment with the vertical axis of the column or string and according to the properties derived from coefficient g33 of the piezoelectric tensor of the piezoelectric material, either with vertical components of the vibration or the resultants of converting into vertical pulses the components of the other two axes of the vibrations. Also, the variable pressures may be aligned to directions or axes normal to the vertical axis of the device by using the properties derived from coefficients g31 or g33 of the piezoelectric tensor of the piezoelectric material.

While preferred embodiments of the present invention have been illustrated and described, it will be obvious to those skilled in the art that various changes and modifications may be made therein without departing from the scope of the invention as defined in the appended claims.

## Claims

1. Device for generating electrical energy from vibrating tools, the device comprising piezoelectric means connected to at least a vibrating part of the tool for converting vibrations from the tool into electrical energy.

2. The device of claim 1, wherein the piezoelectric means comprises at least one piezoelectric element subject to variable mechanical pressure, the at least one piezoelectric element being connected to a control circuit and to a stress restricting device for protecting the piezoelectric means.

3. The device of claim 2, wherein the control circuit comprises at least one transformer, a rectifier and a tension regulator, for adjusting and/or regulating electrical parameters of the electrical energy.

4. The device of claim 3, wherein the control circuit includes at least one electrical energy accumulator.

5. The device of claim 1, wherein the tool is a well bore drilling tool and the piezoelectric means comprises at least one assembly of piezoelectric elements housed into a main tubular body having a first end connected to a stationary coupling device and a second end connected to a movable coupling device capable of axially moving in the main tubular body for applying varying pressure onto the at least one piezoelectric elements assembly, the at least one assembly of piezoelectric elements being connected to a control circuit for adjusting and/or regulating electrical parameters of the electrical energy.

6. The device of claim 5, wherein the at least one assembly of piezoelectric elements comprises at least one an array of piezoelectric discs that are axially arranged and connected to a stress restricting device for preventing the array of discs from being affected by excessive stresses and impacts.

7. The device of claim 6, wherein the at least one array of piezoelectric discs includes a first end and a second end, the first end having two electrical connecting terminals and at least one mechanical coupling bore, and the second end having two electrical connecting terminals and at least one mechanical coupling pin, with a first terminal of the first end being electrically connected to a first terminal of the second end and a second terminal of the first end being electrically connected to a second terminal of the second end.

8. The device of claim 7, wherein the at least one array of piezoelectric discs comprises at least two axially connected arrays.

9. The device of claim 7, wherein the array of piezoelectric discs is axially connected to an electrical adapting device forming part of the control circuit, the adapting device including at least one transformer and a diode bridge.

10. The device of claim 6, wherein the array of piezoelectric discs receives pressure vibrations along an axis according to piezo coefficient g33 of the piezoelectric discs.

11. The device of claim 6, wherein the array of piezoelectric discs receives pressure vibrations along two normal axes according to piezo coefficients g33 and g31 of the piezoelectric discs.

12. The device of claim 9, wherein the stationary coupling device comprises an electric concentring device that houses a further part of the control circuit and at least one operation equipment.

13. The device of claim 12, wherein the stationary coupling device, the electric concentring device, the movable coupling device and the main body include axially extending orifices for passing drilling mud employed in the drilling of the well bore.

14. The device of claim 8, wherein the array of piezoelectric discs comprises an outer casing housing at least two piezoelectric discs arranged axially side by side, facing to each other by their disc faces, and mounted on an electrically insulating shaft, the discs being electrically in-parallel connected to the electrical connecting terminals.

15. The device of claim 14, wherein the electrically insulating shaft has an end including an adjusting screw for compressing the array of piezoelectric discs.

16. The device of claim 5, wherein the main tubular body has at least one notch arranged at the second end of the main tubular body, the movable coupling device at least partially and axially moving within the main tubular body and including a key radially outwardly extending through the at least one notch for restricting the axial relative movement between the main tubular body and the movable coupling device.

17. The device of claim 12, wherein said part of the control circuit housed in the concentring device comprises at least one capacitor and a tension regulator.

18. The device of claim 17, wherein the adapting device is a device for adapting the tension and impedance of the electrical energy and is connected said further part of the control circuit.

19. The device of claim 6, wherein the stress restricting device is selected from the group consisting of springs, high impact resisting rubber, Belleville-type discs springs, hydraulic springs.

20. The device of claim 19, wherein the stress restricting device has a stiffness that may be adjusted to reach the mechanical resonance of the electrical energy generating device.

21. The device of claim 1, wherein the piezoelectric means are made of a material selected from the group consisting of ceramics, crystals, composite materials, lead titanate, lead zirconate.

22. The device of claim 5, further comprising accumulator means for accumulating at least part of the electrical energy generated by the device.
